# EUROPÄISCHE PATENTANMELDUNG

(11) **EP 3 277 003 A1**
(43) Veröffentlichungstag der Anmeldung: **31.01.2018**
(21) Anmeldenummer: 16182101.2
(22) Anmeldetag: 29.07.2016
(51) Int. Cl.: H04W 12/04, H04W 8/20

(54) **PROFILSERVER FOR THE SECURE DOWNLOAD OF ESIM PROFILES**

(71) Anmelder: Deutsche Telekom AG, 53113 Bonn (DE)
(72) Erfinder: SEIFERT, Olaf, 27308 Kirchlinteln (DE)
(74) Vertreter: Patentship Patentanwaltsgesellschaft mbH

(57) **Zusammenfassung**

Die vorliegende Erfindung betrifft einen Profilserver (100) zur Bereitstellung eines elektronischen Kommunikationsprofils für ein elektronisches Teilnehmeridentifikationsmodul (101) eines mobilen Kommunikationsgerätes (103) für die Kommunikation über ein Kommunikationsnetzwerk, mit: einer Kommunikationsschnittstelle (105) zum Empfangen einer Profilanfrage nach dem Kommunikationsprofil von dem mobilen Kommunikationsgerät (103), wobei die Profilanfrage eine elektronische Identifikation des elektronischen Identifikationsmoduls (101) und eine Geräteinformation über das mobile Kommunikationsgerät (103) aufweist; einem Speicher (106), in welchem eine Mehrzahl von Kommunikationsprofilen für unterschiedliche Geräteeigenschaften gespeichert ist; und einem Prozessor (107), welcher ausgebildet ist, auf der Basis der elektronischen Identifikation und der Geräteinformation ein Kommunikationsprofil auszuwählen; wobei die Kommunikationsschnittstelle (105) ausgebildet ist, das ausgewählte elektronische Kommunikationsprofil an das mobile Kommunikationsgerät auszusenden.

## Beschreibung

Die vorliegende Erfindung betrifft das Gebiet der elektronischen Teilnehmeridentifikationsmodule (eSIM: electronic Subscriber Identification Module).

Elektronische Teilnehmeridentifikationsmodule (eSIMs) sind in mobilen Kommunikationsgeräten als festverdatete Hardwareschaltungen implementiert. Für eine Kommunikation über ein Kommunikationsnetzwerk benötigt jedes eSIM ein Kommunikationsprofil (eSIM-Profil), das einem Betreiber des Kommunikationsnetzwerks zugeordnet ist. Das Kommunikationsprofil bestimmt die Kommunikationsfähigkeit, wie beispielsweise ein Datenvolumen für das mit einem eSIM ausgestattete mobile Kommunikationsgerät in einem Kommunikationsnetzwerk eines Mobilfunknetzwerkbetreibers.

Üblicherweise wird das elektronische Kommunikationsprofil durch ein mobiles Kommunikationsgerät, beispielsweise ein Smartphone, von einem Profilserver, beispielsweise von einem SMDP+-Profilserver abgerufen und für das elektronische Teilnehmeridentifikationsmodul aktiviert.

Die Zuordnung des elektronischen Kommunikationsprofils zu einem Benutzer des mobilen Kommunikationsgerätes erfolgt in der Regel durch einen Vertrag zwischen einem Netzwerkbetreiber und einem Benutzer. Der Benutzer kann jedoch unterschiedliche Kommunikationsgeräte mit unterschiedlichen Leistungscharakteristiken aufweisen.

Es ist die Aufgabe der Erfindung, ein Konzept zur Bereitstellung eines geräteangepassten elektronischen Kommunikationsprofils zu schaffen.

Diese Aufgabe wird durch die Merkmale der unabhängigen Ansprüche gelöst. Vorteilhafte Weiterbildungsformen sind Gegenstand der abhängigen Ansprüche, der Figuren sowie der Beschreibung.

Die vorliegende Erfindung basiert auf der Erkenntnis, dass die obige Aufgabe durch die Berücksichtigung in einem Profilserver, bzw. durch zusätzliche Übermittlung einer Geräteinformation an den Profilserver gelöst werden kann. Der Profilserver kann auf der Basis der Geräteinformation eine Leistungs- bzw. Performancecharakteristik des mobilen Kommunikationsgerätes bestimmen und ein geräteangepasstes elektronisches Kommunikationsprofil bereitstellen. Hierbei kann der Profilserver das elektronische Kommunikationsprofil an das jeweilige Kommunikationsgerät spezifisch anpassen, indem beispielsweise eine höhere Datenrate oder ein Zugriff auf einen Netzwerkdienst, welcher durch das Kommunikationsgerät unterstützt wird, definiert bzw. freigeschaltet werden.

Gemäß einem ersten Aspekt betrifft die Erfindung einen Profilserver zur Bereitstellung eines elektronischen Kommunikationsprofils für ein elektronisches Teilnehmeridentifikationsmodul eines mobilen Kommunikationsgerätes für die Kommunikation über ein Kommunikationsnetzwerk, mit einer Kommunikationsschnittstelle zum Empfangen einer Profilanfrage nach dem Kommunikationsprofil von dem mobilen Kommunikationsgerät, wobei die Profilanfrage eine elektronische Identifikation des elektronischen Identifikationsmoduls und eine Geräteinformation über das mobile Kommunikationsgerät aufweist, einem Speicher, in welchem eine Mehrzahl von Kommunikationsprofilen für unterschiedliche Geräteeigenschaften gespeichert ist, und einem Prozessor, welcher ausgebildet ist, auf der Basis der elektronischen Identifikation und der Geräteinformation ein Kommunikationsprofil auszuwählen, wobei die Kommunikationsschnittstelle ausgebildet ist, das ausgewählte elektronische Kommunikationsprofil an das mobile Kommunikationsgerät auszusenden.

In einer Ausführungsform umfasst die Geräteinformation zumindest eine der folgenden Angaben: eine Speichergröße oder ein freier Speicher eines Speichers des mobilen Kommunikationsgeräts, insbesondere eines Speichers des elektronischen Teilnehmeridentifikationsmoduls, eine Auflösung einer Bildkamera des mobilen Kommunikationsgerätes, eine Angabe über kontaktlose Schnittstellen, insbesondere NFC, des mobilen Kommunikationsgerätes, eine Angabe über unterstützte Funkzugangstechnologien, insbesondere GSM, UMTS, WiFi oder LTE.

In einer Ausführungsform umfasst die Geräteinformation eine Bezeichnung des mobilen Kommunikationsgerätes, und wobei der Profilserver ausgebildet ist, auf der Basis der Bezeichnung zumindest eine der folgenden Geräteinformationen von einem entfernten Datenserver, beispielsweise einer Hersteller-Datenbank, abzurufen: eine Speichergröße oder ein freier Speicher eines Speichers des mobilen Kommunikationsgeräts, insbesondere eines Speichers des elektronischen Teilnehmeridentifikationsmoduls, eine Auflösung einer Bildkamera des mobilen Kommunikationsgerätes, eine Angabe über kontaktlose Schnittstellen, insbesondere NFC, des mobilen Kommunikationsgerätes, eine Angabe über unterstützte Funkzugangstechnologien, insbesondere GSM, UMTS, WiFi oder LTE.

In einer Ausführungsform ist der Prozessor ausgebildet, das elektronische Kommunikationsprofil ferner in Abhängigkeit von einem Kommunikationsvertrag zwischen einem Benutzer des mobilen Kommunikationsgerätes und einem Netzwerkbetreiber auszuwählen.

In einer Ausführungsform ist der Prozessor ausgebildet, das elektronische Kommunikationsprofil ferner in Abhängigkeit von der elektronischen Identifikation auszuwählen. Dabei können für dieselbe elektronische Identifikation unterschiedliche elektronische Kommunikationsprofile bereitgestellt werden, welche sich beispielsweise in gerätespezifischen Leistungseigenschaften oder Kommunikationseigenschaften unterscheiden.

In einer Ausführungsform ist der Prozessor ausgebildet, das elektronische Kommunikationsprofil an die Geräteeigenschaft anzupassen, insbesondere hinsichtlich einer Datenrate oder eines Datenvolumens, insbesondere durch eine Angabe einer höheren oder niedrigeren Datenrate oder eines niedrigeren oder höheren Datenvolumens in dem Kommunikationsprofil.

In einer Ausführungsform definiert das ausgewählte Kommunikationsprofil die Kommunikationseigenschaften der Kommunikation des mobilen Kommunikationsgerätes über das Kommunikationsnetzwerk definiert, insbesondere eine Datenraten, eine Funkzugangstechnologie, Dienste und/oder Anwendungen für das mobile Kommunikationsgerät, insbesondere im Kommunikationsnetzwerk, eine Kommunikationsverzögerung, insbesondere eine maximale Kommunikationsverzögerung. Das ausgewählte Kommunikationsprofil kann ein eSIM-Profil sein bzw. die Angaben eins eSIM-Profils aufweisen.

In einer Ausführungsform ist der Prozessor ausgebildet, die Geräteinformation zu analysieren, um eine Leistungsfähigkeit des mobilen Kommunikationsgerätes zu bestimmen, und wobei der Prozessor ausgebildet ist, und dasjenige Kommunikationsprofil auszuwählen, das die Leistungsfähigkeit, insbesondere hinsichtlich der Datenrate oder der kontaktlosen Schnittstellen wie NFC oder der Bildauflösung einer Bildkamera unterstützt.

In einer Ausführungsform ist das elektronische Kommunikationsprofil ein eSIM-Profil und wobei das elektronische Teilnehmeridentifikationsmodul ein eSIM-Modul.

Gemäß einem zweiten Aspekt betrifft die Erfindung ein Verfahren zur Bereitstellung eines elektronischen Kommunikationsprofils für ein elektronisches
Teilnehmeridentifikationsmodul eines mobilen Kommunikationsgerätes für die Kommunikation über ein Kommunikationsnetzwerk, mit Empfangen einer Profilanfrage nach dem elektronischen Kommunikationsprofil von dem mobilen Kommunikationsgerät, wobei die Profilanfrage eine elektronische Identifikation des elektronischen Identifikationsmoduls und eine Geräteinformation über das mobile Kommunikationsgerät aufweist, und Auswählen eines elektronischen Kommunikationsprofils aus einer Mehrzahl von, insbesondere in einem Speicher, vorgespeicherten elektronischen Kommunikationsprofilen der Basis der elektronischen Identifikation und der Geräteinformation, und Aussenden des ausgewählten elektronischen Kommunikationsprofils an das mobile Kommunikationsgerät.

In einer Ausführungsform umfasst die Geräteinformation zumindest eine der folgenden Angaben: eine Speichergröße oder ein freier Speicher eines Speichers des mobilen Kommunikationsgeräts, insbesondere eines Speichers des elektronischen Teilnehmeridentifikationsmoduls, eine Auflösung einer Bildkamera des mobilen Kommunikationsgerätes, eine Angabe über kontaktlose Schnittstellen, insbesondere NFC, des mobilen Kommunikationsgerätes, eine Angabe über unterstützte Funkzugangstechnologien, insbesondere GSM, UMTS, WiFi oder LTE.

In einer Ausführungsform umfasst das Verfahren das Analysieren der Geräteinformation durch einen Prozessor, um eine Leistungsfähigkeit des mobilen Kommunikationsgerätes zu bestimmen, und wobei der Prozessor ausgebildet ist, und das Auswählen desjenigen Kommunikationsprofils, das die Leistungsfähigkeit, insbesondere hinsichtlich der Datenrate oder der kontaktlosen Schnittstellen wie NFC oder der Bildauflösung einer Bildkamera unterstützt.

In einer Ausführungsform wird Verfahren mittels des Profilservers nach dem ersten Aspekt ausgeführt.

Gemäß einem dritten Aspekt betrifft die Erfindung ein Subnetzwerk eines Kommunikationsnetzwerks mit einer Mehrzahl von Punkt-Zu-Punkt-Subnetzwerken, insbesondere ein Slice eines 5G-Kommunukationsnetzwerks, insbesondere ein mit dem Profilserver nach dem ersten Aspekt, wobei der Profilserver ausschließlich über das Subnetzwerk adressierbar ist.

In einer Ausführungsform ist der Profilserver ein SMDP+-Server.

Weitere Ausführungsbeispiele der Erfindung werden Bezug nehmend auf die beiliegenden Figuren erläutert. Es zeigen:
- Fig. 1: einen Profilserver; und
- Fig. 2: ein Subnetzwerk.

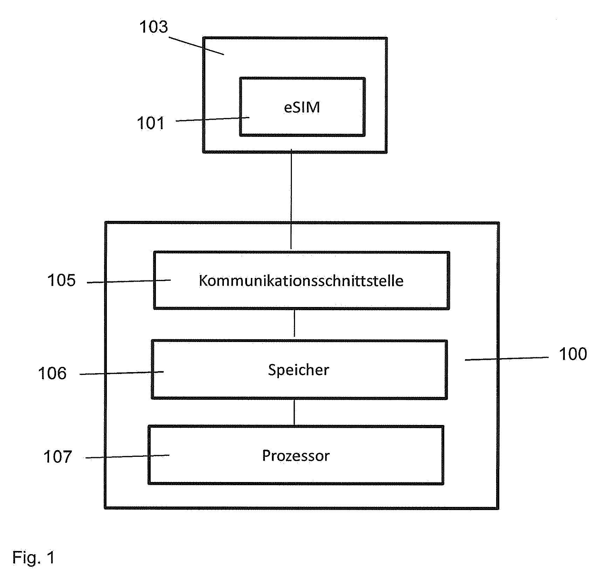

Fig. 1 zeigt einen Profilserver 100 zur Bereitstellung eines elektronischen Kommunikationsprofils für ein elektronisches Teilnehmeridentifikationsmodul 101 eines mobilen Kommunikationsgerätes 103 für die Kommunikation über ein Kommunikationsnetzwerk, mit einer Kommunikationsschnittstelle 105 zum Empfangen einer Profilanfrage nach dem Kommunikationsprofil von dem mobilen Kommunikationsgerät 103, wobei die Profilanfrage eine elektronische Identifikation des elektronischen Identifikationsmoduls 101 und eine Geräteinformation über das mobile Kommunikationsgerät 103 aufweist, einem Speicher 106, in welchem eine Mehrzahl von Kommunikationsprofilen für unterschiedliche Geräteeigenschaften gespeichert ist, und einem Prozessor 107, welcher ausgebildet ist, auf der Basis der elektronischen Identifikation und der Geräteinformation ein Kommunikationsprofil auszuwählen, wobei die Kommunikationsschnittstelle 105 ausgebildet ist, das ausgewählte elektronische Kommunikationsprofil an das mobile Kommunikationsgerät auszusenden.

Die Kommunikationsschnittstelle 105 ist beispielsweise eine Mobilfunkschnittstelle, insbesondere eine LTE- oder eine UMTS-Schnittstelle.

Der Profilserver kann ein SMDP+-Server sein. Das elektronische Teilnehmeridentifikationsmodul 101 ist beispielsweise ein eSIM, implementiert durch einen eUICC. Die elektronische Identifikation ist beispielsweise eine eID des eSIMs, während das elektronische Kommunikationsprofil ein eSIM-Profil ist.

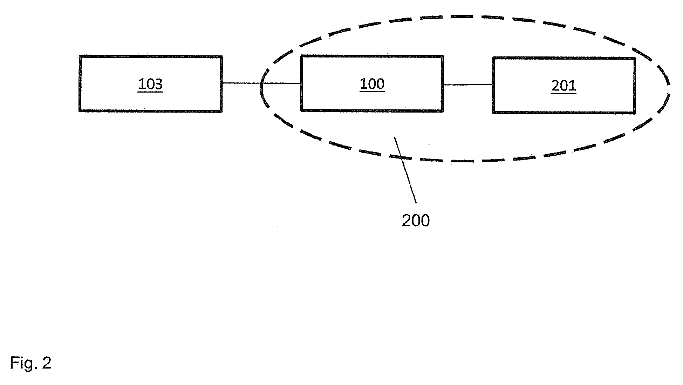

Fig. 2 zeigt ein Subnetzwerk 200 eines Kommunikationsnetzwerks mit einer Mehrzahl von Punkt-Zu-Punkt-Subnetzwerken, insbesondere ein Slice eines 5G-Kommunukationsnetzwerks, mit dem Profilserver 100, wobei der Weiterleitungsserver 100 ausschließlich über das Subnetzwerk 200 adressierbar ist. Hierzu umfasst das Subnetzwerk beispielswiese eine eigene Subnetzwerk-Adresse oder Kennung.

Das Subnetzwerk 200 kann weitere Netzwerkentitäten wie einen Router oder einen Gateway aufweisen, welche dem Profilserver 100 nachgeschaltet oder vorgeschaltet werden können.

Das Subnetzwerk kann ferner eine Datenbank 201 aufweisen, in welcher für unterschiedliche Kommunikationsgeräte Geräteinformationen oder Kommunikationscharakteristiken bzw. Leistungsfähigkeiten gespeichert sind. Der Profilserver 100 kann direkt und optional ausschließlich auf die ausgelagerte Datenbank 201 zugreifen. In der Datenbank 201 können ferner Kommunikationsprofile gespeichert sein- Dadurch wird ein effizienter Dienst zur Bereitstellung von elektronischen Kommunikationsprofilen implementiert.

Das Subnetzwerk 200 kann ein Slice eines 5G-SUbnetwzerks sein und als Dienst zur Bereitstellung von geräteangepassten Kommunikationsprofilen, insbesondere eSIM-Profilen bereitgestellt werden.

## Patentansprüche

1. Profilserver (100) zur Bereitstellung eines elektronischen Kommunikationsprofils für ein elektronisches Teilnehmeridentifikationsmodul (101) eines mobilen Kommunikationsgerätes (103) für die Kommunikation über ein Kommunikationsnetzwerk, mit:
einer Kommunikationsschnittstelle (105) zum Empfangen einer Profilanfrage nach dem Kommunikationsprofil von dem mobilen Kommunikationsgerät (103), wobei die Profilanfrage eine elektronische Identifikation des elektronischen Identifikationsmoduls (101) und eine Geräteinformation über das mobile Kommunikationsgerät (103) aufweist;
einem Speicher (106), in welchem eine Mehrzahl von Kommunikationsprofilen für unterschiedliche Geräteeigenschaften gespeichert ist; und
einem Prozessor (107), welcher ausgebildet ist, auf der Basis der elektronischen Identifikation und der Geräteinformation ein Kommunikationsprofil auszuwählen; wobei
die Kommunikationsschnittstelle (105) ausgebildet ist, das ausgewählte elektronische Kommunikationsprofil an das mobile Kommunikationsgerät auszusenden.

2. Profilserver (100) nach Anspruch 1, wobei die Geräteinformation zumindest eine der folgenden Angaben umfasst: eine Speichergröße oder ein freier Speicher eines Speichers des mobilen Kommunikationsgeräts, insbesondere eines Speichers des elektronischen Teilnehmeridentifikationsmoduls, eine Auflösung einer Bildkamera des mobilen Kommunikationsgerätes, eine Angabe über kontaktlose Schnittstellen, insbesondere NFC, des mobilen Kommunikationsgerätes, eine Angabe über unterstützte Funkzugangstechnologien, insbesondere GSM, UMTS, WiFi oder LTE.

3. Profilserver (100) nach einem der vorstehenden Ansprüche, wobei die Geräteinformation eine Bezeichnung des mobilen Kommunikationsgerätes umfasst, und wobei der Profilserver (100) ausgebildet ist, auf der Basis der Bezeichnung zumindest eine der folgenden Geräteinformationen von einem entfernten Datenserver abzurufen:
eine Speichergröße oder ein freier Speicher eines Speichers des mobilen Kommunikationsgeräts, insbesondere eines Speichers des elektronischen Teilnehmeridentifikationsmoduls, eine Auflösung einer Bildkamera des mobilen Kommunikationsgerätes, eine Angabe über kontaktlose Schnittstellen, insbesondere NFC, des mobilen Kommunikationsgerätes, eine Angabe über unterstützte Funkzugangstechnologien, insbesondere GSM, UMTS, WiFi oder LTE.

4. Profilserver (100) nach einem der vorstehenden Ansprüche, wobei der Prozessor (107) ausgebildet ist, das elektronische Kommunikationsprofil ferner in Abhängigkeit von einem Kommunikationsvertrag zwischen einem Benutzer des mobilen Kommunikationsgerätes und einem Netzwerkbetreiber auszuwählen.

5. Profilserver (100) nach einem der vorstehenden Ansprüche, wobei der Prozessor (107) ausgebildet ist, das elektronische Kommunikationsprofil ferner in Abhängigkeit von der elektronischen Identifikation auszuwählen.

6. Profilserver (100) nach einem der vorstehenden Ansprüche, wobei der Prozessor (107) ausgebildet ist, das elektronische Kommunikationsprofil an die Geräteeigenschaft anzupassen, insbesondere hinsichtlich einer Datenrate oder eines Datenvolumens, insbesondere durch eine Angabe einer höheren oder niedrigeren Datenrate oder eines niedrigeren oder höheren Datenvolumens in dem Kommunikationsprofil.

7. Profilserver (100) nach einem der vorstehenden Ansprüche, wobei das ausgewählte Kommunikationsprofil die Kommunikationseigenschaften der Kommunikation des mobilen Kommunikationsgerätes über das Kommunikationsnetzwerk definiert, insbesondere eine Datenraten, eine Funkzugangstechnologie, Dienste und/oder Anwendungen für das mobile Kommunikationsgerät, insbesondere im Kommunikationsnetzwerk, eine Kommunikationsverzögerung, insbesondere eine maximale Kommunikationsverzögerung.

8. Profilserver (100) nach einem der vorstehenden Ansprüche, wobei der Prozessor (107) ausgebildet ist, die Geräteinformation zu analysieren, um eine Leistungsfähigkeit des mobilen Kommunikationsgerätes zu bestimmen, und wobei der Prozessor ausgebildet ist, und dasjenige Kommunikationsprofil auszuwählen, das die Leistungsfähigkeit, insbesondere hinsichtlich der Datenrate oder der kontaktlosen Schnittstellen wie NFC oder der Bildauflösung einer Bildkamera unterstützt.

9. Profilserver (100) nach einem der vorstehenden Ansprüche, wobei das elektronische Kommunikationsprofil ein eSIM-Profil und wobei das elektronische Teilnehmeridentifikationsmodul ein eSIM-Modul ist.

10. Verfahren zur Bereitstellung eines elektronischen Kommunikationsprofils für ein elektronisches Teilnehmeridentifikationsmodul (101) eines mobilen Kommunikationsgerätes (103) für die Kommunikation über ein Kommunikationsnetzwerk, mit:
Empfangen einer Profilanfrage nach dem elektronischen Kommunikationsprofil von dem mobilen Kommunikationsgerät (103), wobei die Profilanfrage eine elektronische Identifikation des elektronischen Identifikationsmoduls (101) und eine Geräteinformation über das mobile Kommunikationsgerät (103) aufweist;
einem Speicher (106), in welchem eine Mehrzahl von Kommunikationsprofilen für unterschiedliche Geräteeigenschaften gespeichert ist; und
Auswählen eines elektronischen Kommunikationsprofils aus einer Mehrzahl von vorgespeicherten elektronischen Kommunikationsprofilen der Basis der elektronischen Identifikation und der Geräteinformation; und
Aussenden des ausgewählten elektronischen Kommunikationsprofils an das mobile Kommunikationsgerät.

11. Verfahren nach Anspruch 10, wobei die Geräteinformation zumindest eine der folgenden Angaben umfasst: eine Speichergröße oder ein freier Speicher eines Speichers des mobilen Kommunikationsgeräts, insbesondere eines Speichers des elektronischen Teilnehmeridentifikationsmoduls, eine Auflösung einer Bildkamera des mobilen Kommunikationsgerätes, eine Angabe über kontaktlose Schnittstellen, insbesondere NFC, des mobilen Kommunikationsgerätes, eine Angabe über unterstützte Funkzugangstechnologien, insbesondere GSM, UMTS, WiFi oder LTE.

12. Verfahren nach Anspruch 10 oder 11, mit: Analysieren der Geräteinformation durch einen Prozessor, um eine Leistungsfähigkeit des mobilen Kommunikationsgerätes zu bestimmen, und wobei der Prozessor ausgebildet ist, und Auswählen desjenigen Kommunikationsprofils, das die Leistungsfähigkeit, insbesondere hinsichtlich der Datenrate oder der kontaktlosen Schnittstellen wie NFC oder der Bildauflösung einer Bildkamera unterstützt.

13. Verfahren nach einem der vorstehenden Ansprüche 10 bis 12, das mittels des Profilservers nach einem der Ansprüche 1 bis 10 ausgeführt wird.

14. Subnetzwerk (200) eines Kommunikationsnetzwerks mit einer Mehrzahl von Punkt-Zu-Punkt-Subnetzwerken, insbesondere ein Slice eines 5G-Kommunukationsnetzwerks, insbesondere ein mit:
dem Profilserver (100) nach einem der Ansprüche 1 bis 9, wobei der Profilserver (100) ausschließlich über das Subnetzwerk (200) adressierbar ist.

15. Subnetzwerk (200) nach Anspruch 14, wobei der Profilserver ein SMDP+-Server ist.
